(19) Europäisches Patentamt
European Patent Office
Office européen des brevets

(11) EP 1 231 234 A2

(12) **EUROPEAN PATENT APPLICATION**

(43) Date of publication:
**14.08.2002 Bulletin 2002/33**

(51) Int Cl.[7]: **C08G 77/34**

(21) Application number: **01128700.0**

(22) Date of filing: **01.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **13.02.2001 US 782439**

(71) Applicant: **DOW CORNING CORPORATION**
**Midland Michigan 48686-0994 (US)**

(72) Inventors:
- **Wrolson, Burt Michael**
  **Midland, Michigan 48640 (US)**
- **Zimmermann, Brett Lee**
  **Birch Run, Michigan 48415 (US)**

(74) Representative:
**Sternagel, Fleischer, Godemeyer & Partner**
**Patentanwälte**
**Braunsberger Feld 29**
**51429 Bergisch Gladbach (DE)**

(54) **Continuous method of making silicone emulsions having low residual volatile siloxane oligomer content**

(57) Volatile siloxane oligomers are removed from an emulsion containing siloxane polymers and volatile siloxane oligomers prepared by emulsion polymerization of volatile siloxane oligomers by continuously feeding the emulsion to a continuous flow device for vaporizing liquids, continuously feeding a stripping gas to the continuous flow device, continuously removing an overhead fraction of volatile siloxane oligomers from the continuous flow device, and continuously removing an unvaporized bottom fraction from the continuous flow device of an emulsion containing siloxane polymers which is substantially free of residual volatile siloxane oligomers used to prepare the emulsion. A benefit of the method is that the viscosity of the siloxane polymer in the emulsion before the emulsion is fed to the continuous flow device is substantially the same as the viscosity of the siloxane polymer in the emulsion after the emulsion is removed from the continuous flow device.

EP 1 231 234 A2

## Description

This invention is directed to a method of removing residual volatile siloxane oligomers from emulsions containing siloxane polymers prepared by emulsion polymerization of the volatile siloxane oligomers. In particular, the volatile siloxane oligomers are removed from the emulsion containing the siloxane polymer by a continuous process in which the emulsion containing the siloxane polymer and the residual volatile siloxane oligomer is passed through a continuous flow device for vaporizing liquids such as a film type evaporator.

US Patent 2834754 (May 13, 1958) describes a batch process for removing volatile organopolysiloxanes from high molecular weight organopolysiloxanes with a stripping gas such as steam, neon, nitrogen or argon, while kneading. According to that process, a Banbury mixer with sigma-type blades is used to remove octamethylcyclotetrasiloxane from a highly viscous masse or gummy elastic silicone solid. A continuous process employing a stripping unit containing heated parallel plates is used in US 4096160 (June 20, 1978) to remove a steam heated mixture of hexamethylcyclotrisiloxane, octamethylcyclotetrasiloxane, decamethylcyclopentasiloxane, and dodecamethylcyclohexasiloxane, from silanol terminated dimethylpolysiloxane fluids having a viscosity of 1,000-1,000,000 centistoke ($mm^2/s$). Both US Patent 2834754 and US Patent 4096160 require specialized equipment for handling viscous polymers. Also, the rate of heat transfer is substantially reduced when processing such viscous polymers.

A known method for obviating processing difficulties associated with viscous polymers is to prepare and handle such polymers in the form of an aqueous emulsion. A batch process carried out in a heated flask is described in US 4600436 (July 15, 1986) for stripping emulsion polymerized polysiloxane emulsions of the cyclic siloxanes or other low molecular weight siloxanes used to prepare the emulsions. According to the '436 patent, emulsions stripped by such a batch process possess improved film properties. In another batch process described in US Patent 5922108 (July 13, 1999), volatile organopolysiloxanes such as octamethylcyclotetrasiloxane are removed from a fluid stream such as air containing volatile organopolysiloxanes and a hydrocarbon such as methane or pentane, by passing the fluid stream through a column packed with dry soil.

Unexpectedly, however, it has been discovered that emulsion polymerized polysiloxane emulsions stripped of cyclic siloxanes or other low molecular weight siloxanes from which they were prepared, by a continuous process rather than a batch process, possess improved properties not realized by any of these patentees.

Thus, the viscosity or molecular weight of the polymer in continuously stripped emulsion polymerized polysiloxane emulsions according to this invention does not change from the viscosity of the polymer in the unstripped emulsion, whereas in a batch process according to the '436 patent, the viscosity of the polymer in the batch stripped emulsion polymerized polysiloxane emulsion can decrease or drift from the viscosity of the polymer in the unstripped emulsion. For example, in such a batch process, polymer viscosity drift occured even when the emulsion was only slightly acidic or basic, i.e., when the emulsion polymerization catalyst had been neutralized for all practical purposes. Accordingly, neither the problem, i.e., viscosity drift, nor the solution, i.e., use a continuous process rather than a batch process, was recognized in the prior art.

Thus, the invention relates to a continuous process for removing volatile siloxane oligomers from an emulsion containing siloxane polymers and volatile siloxane oligomers prepared by emulsion polymerization of volatile siloxane oligomers.

According to the process, the mixture is continuously fed to a continuous flow device for vaporizing liquids in which the mixture is subjected to vaporization in the continuous flow device. An overhead fraction of the volatile siloxane oligomers is continuously removed from the continuous flow device, while an unvaporized bottom fraction is continuously removed from the continuous flow device. A stripping gas is fed to the continuous flow device in a manner that results in either a cocurrent or countercurrent flow through the device. The unvaporized bottom fraction consists of an emulsion containing siloxane polymers which is substantially free of any residual volatile siloxane oligomers used to prepare the emulsion. As used herein, the term *substantially free* as applied to the amount of residual volatile siloxane oligomers in the emulsion is intended to mean that the emulsion contains less than 0.18 parts by weight of volatile siloxane oligomers per unit weight of siloxane polymer in the emulsion.

The invention also relates to emulsions prepared according to this process which can be characterized by the fact that the viscosity or the molecular weight of the siloxane polymer in the emulsion prior to introduction of the emulsion into the continuous flow device is substantially the same as the viscosity of the siloxane polymer in the emulsion removed from the continuous flow device. As used herein, the term *substantially the same* as applied to the viscosity or molecular weight of siloxane polymer in the emulsion prior to introduction into the continuous flow device and the viscosity or molecular weight of siloxane polymer in the emulsion removed from the continuous flow device is intended to mean a decrease in viscosity or molecular weight of less than ten percent.

In a preferred embodiment of the invention, an emulsion containing siloxane polymers and residual of the volatile siloxane oligomer used to prepare the emulsion by emulsion polymerization, is fed to the top of a falling thin film evaporator or spinning band film evaporator, constructed of one or more vertical tubes. The emulsion containing the siloxane polymer and residual of the volatile siloxane oligomer is heated by a heat transfer fluid flowing either within

or on the outside of the tubes, depending on the particular design of the equipment. A preheated stripping gas such as steam, nitrogen, air, or argon, is caused to flow concurrently or counter currently to the flow of the emulsion. The preheated stripping gas extracts the volatile siloxane oligomer from the emulsion, and the extracted volatile siloxane oligomer can be recovered from the stripping gas by condensing the vapors to form two liquid phases. The volatile siloxane oligomer phase can be separated from the water phase by a gravity settling tank, a cyclone, a centrifuge, a coalescer, or a separation membrane. The preferred operating temperature used in equipment of this type is generally in the range of 80-105 °C.

The equipment used to carry out the process according to the invention can be any of the film type evaporator units known in the art for the distillation of heat sensitive materials. Such units include climbing thin film evaporators, falling thin film evaporators, spinning disc film evaporators, spinning band columns, agitated thin film evaporators, horizontal and vertical wiped film evaporators, and units which involve both climbing and falling films.

Some units illustrative of the above types are shown in US Patents 2712520 (July 5, 1955), 2890155 (June 9, 1959), 2927634 (March 8, 1960), 2993842 (July 25, 1961), 3020211 (February 6, 1962), 3060107 (October 23, 1962), 4017355 (April 12, 1977), 4130527 (December 19, 1978), 4770746 (September 13, 1988), and 5603809 (February 18, 1997).

In such units, the feed is caused to flow as a thin film through a heating zone in which the rate of heat transfer is very high. The more volatile component of the feed is removed as overhead, and the remaining portion of the feed is removed from another suitable point in the still. The overall residence time of the feed in the still is kept as short as possible.

Steam is the preferred stripping gas for carrying out the process. The rate at which volatile siloxane oligomers diffuse from the emulsion particles to the stripping gas increases with temperature. As a consequence, the temperature of the feed during its passage through the continuous flow device should be within the range of 70-110 °C, preferably 80-105 °C. Operation at sub-atmospheric pressure is required at temperatures below the normal boiling point of the emulsion being treated. No advantage is gained by operating the process at a pressure less than the saturated vapor pressure of the system, but if such conditions are utilized, care must be exercised not to remove too much water from the emulsion via *in situ* steam generation, thus creating a concentrated emulsion with an undesirably high viscosity.

Other types of continuous flow devices for vaporizing liquids other than the film evaporators noted above can also be used such as packed columns or plate columns.

Generally, a temperature of 70-110 °C is maintained in the continuous flow device for vaporizing liquids, preferably a temperature of 80-105°C. Typically, the process is continued until the emulsion in the unvaporized bottom fraction being continuously removed from the continuous flow device for vaporizing liquids contains less than 0.18 parts by weight of the volatile siloxane oligomer per unit weight of the siloxane polymer in the emulsion. This can be accomplished, for example, by continuously recirculating the unvaporized bottom fraction through the continuous flow device for vaporizing liquids until the desired content is obtained, or by utilizing a continuous flow device with sufficient contact time within the heated zone to effect separation within a single pass. For most emulsions prepared according to this invention, the residence time of the emulsion in the continuous flow device for vaporizing liquids will be less than 60 minutes, preferably less than 30 minutes, and most preferably less than 10 minutes. The process is capable of functioning in a practical manner using emulsions containing a siloxane polymer with a viscosity of 100-100,000,000 centistoke ($mm^2/s$).

As used herein, the term *emulsion polymerization* refers to any of the polymerization processes known in the art, as represented for example by processes such as described in US Patents 2891920 (June 23, 1959), 3294725 (December 27, 1966), 4999398 (March 12, 1991), 5502105 (March 26, 1996), 5661215 (August 26, 1997), and European Patent Specification
EP 0 459 500 B1 (March 5, 1997).

These emulsion polymerization processes typically involve opening of the ring of a volatile siloxane oligomer using an acid or a base catalyst in the presence of water. Upon opening of the ring, siloxanes with terminal hydroxy groups are formed. These siloxanes then react with one another by a condensation reaction to form the siloxane polymer.

A simplified representation of the process chemistry is shown below for a volatile siloxane oligomer such as octamethylcyclotetrasiloxane, in which Me represents $CH_3$.

$$(Me_2SiO)_4 + H_2O + \text{Catalyst} \rightarrow HOMe_2SiOMe_2SiOMe_2SiOSiMe_2OH \rightarrow$$

$$HOMe_2SiOMe_2SiOMe_2SiOSiMe_2OH + HOMe_2SiOMe_2SiOMe_2SiOSiMe_2OH \rightarrow$$

$$HOMe_2SiO(Me_2SiO)_6SiMe_2OH + H_2O.$$

Siloxane polymers of higher molecular weight can be obtained by allowing this process to continue.

Generally, volatile siloxane oligomers removed by this process are cyclic siloxane monomers of the formula

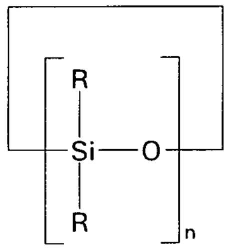

where each R is a saturated or unsaturated alkyl group of 1-6 carbon atoms, an aryl group of 6-10 carbon atoms, and n is 3-7. R can optionally contain a functional group which is unreactive in the ring opening and polymerization reaction.

Representative R groups are methyl, ethyl, propyl, phenyl, allyl, vinyl, and -R'F. R' is an alkylene group of 1-6 carbon atoms or an arylene group of 6-10 carbon atoms, and F is a functional group such as amine, diamine, halogen, carboxy, or mercapto. R can also be - R'F'R where R' and R are described above and F' is a non-carbon atom such as oxygen, nitrogen, or sulfur.

Volatile siloxanes oligomers of most interest herein include octamethylcyclotetrasiloxane (D4) and decamethylcyclopentasiloxane (D5). Silicone emulsions that can be treated according to the method of the invention include emulsions obtained by emulsion polymerization of only volatile cyclic siloxane oligomers or by emulsion polymerization of volatile cyclic siloxane oligomers in combination with alkoxysilanes. Suitable alkoxysilanes can be represented by the formulas $R''Si(OR''')_3$, $R''_2Si(OR''')_2$ or $(R'''O)_4Si$ wherein R" is either a neutral organic group such as an unsubstituted alkyl group $C_aH_{2a+1}$ containing 1-12 carbon atoms or an aryl group such as phenyl, or a cationic organofunctional group such as an amino group. R''' in hydrolyzable group (OR''') in these formulas represents an alkyl group containing 1-6 carbon atoms. Silicone emulsions prepared with such alkoxysilanes generally contain 1-10 mole percent of R" groups based on the total content of silicones in the emulsion.

The tetraalkoxysilanes $(R'''O)_4Si$ are exemplified by tetramethoxysilane, tetraethoxysilane, tetrapropoxysilane, and tetrabutoxysilane.

Hydrolyzable water-soluble or partially pre-hydrolyzed alkoxysilanes $R''Si(OR''')_3$ with neutral organic groups R" are exemplified by methyltrimethoxysilane (MTM), methyltriethoxysilane, ethyltrimethoxysilane, propyltrimethoxysilane, n-butyltrimethoxysilane, hexyltrimethoxysilane, octyltrimethoxysilane, octyltriethoxysilane, dodecyltrimethoxysilane, dodecyltriethoxysilane, and phenyltrimethoxysilane.

Hydrolyzable or partially pre-hydrolyzed water-soluble alkoxysilanes $R''Si(OR''')_3$ with cationic organofunctional groups R" are exemplified by N-(2-aminoethyl)-3-aminopropyltrimethoxysilane, 3-aminopropyltrimethoxysilane, 3-aminopropylmethyldiethoxysilane, and n-cyclohexylaminopropylmethyldimethoxysilane.

Silicone emulsions that can be treated according to the method of the invention can contain anionic surfactants, including but not limited to, sulfonic acids and their salt derivatives. Some representative examples of anionic surfactants are alkali metal sulfosuccinates; sulfonated glyceryl esters of fatty acids such as sulfonated monoglycerides of coconut oil acids; salts of sulfonated monovalent alcohol esters such as sodium oleyl isethionate; amides of amino sulfonic acids such as the sodium salt of oleyl methyl tauride; sulfonated products of fatty acid nitriles such as palmitonitrile sulfonate; sulfonated aromatic hydrocarbons such as sodium alpha-naphthalene monosulfonate; condensation products of naphthalene sulfonic acids with formaldehyde; sodium octahydro anthracene sulfonate; alkali metal alkyl sulfates; ether sulfates having alkyl groups of eight or more carbon atoms such as sodium lauryl ether sulfate; and alkylaryl sulfonates having one or more alkyl groups of eight or more carbon atoms such as neutral salts of hexadecylbenzene sulfonic acid and $C_{20}$ alkylbenzene sulfonic acid.

Commercial anionic surfactants which can be useful in this invention include the sodium salt of dodecylbenzene sulfonic acid sold under the name SIPONATE DS-10 by Alcolac Inc., Baltimore, Maryland; sodium n-hexadecyl diphenyloxide disulfonate sold under the name DOWFAX 8390 by The Dow Chemical Company, Midland, Michigan; and the sodium salt of a secondary alkane sulfonate sold under the name HOSTAPUR SAS 60 by Clariant Corporation, Charlotte, North Carolina.

Silicone emulsions treated according to the method of the invention can contain cationic surfactants, including compounds containing quaternary ammonium hydrophilic moieties in the molecule which are positively charged, such as quaternary ammonium salts represented by $R3R4R5R6N^+X^-$ where R3 to R6 are alkyl groups containing 1-30 carbon atoms, or alkyl groups derived from tallow, coconut oil, or soy; and X is halogen, i.e., chlorine or bromine. Dialkyl dimethyl ammonium salts which can be used are represented by $R7R8N^+(CH_3)_2X^-$ where R7 and R8 are alkyl groups containing 12-30 carbon atoms or alkyl groups derived from tallow, coconut oil, or soy; and X is halogen. Monoalkyl

trimethyl ammonium salts which can be used are represented by $R9N^+(CH_3)_3X^-$ where R9 is an alkyl group containing 12-30 carbon atoms or an alkyl group derived from tallow, coconut oil, or soy; and X is halogen.

Representative quaternary ammonium salts are dodecyltrimethyl ammonium chloride/lauryltrimethyl ammonium chloride (LTAC), cetyltrimethyl ammonium chloride (CTAC), didodecyldimethyl ammonium bromide, dihexadecyldimethyl ammonium chloride, dihexadecyldimethyl ammonium bromide, dioctadecyldimethyl ammonium chloride, dieicosyldimethyl ammonium chloride, didocosyldimethyl ammonium chloride, dicoconutdimethyl ammonium chloride, ditallowdimethyl ammonium chloride, and ditallowdimethyl ammonium bromide. These and other quaternary ammonium salts are commercially available under names such as ADOGEN, ARQUAD, TOMAH, and VARIQUAT.

Silicone emulsions that can be treated according to the method of the invention can contain nonionic surfactants. Commercial types of nonionic surfactants can be exemplified by 2,6,8-trimethyl-4-nonyloxy polyethylene oxyethanols (6EO) and (10EO) sold under the names TERGITOL® TMN-6 and TERGITOL® TMN-10; alkyleneoxy polyethylene oxyethanol ($C_{11-15}$ secondary alcohol ethoxylates 7EO, 9EO, and 15EO) sold under the names TERGITOL® 15-S-7, TERGITOL® 15-S-9, TERGITOL® 15-S-15; other $C_{11-15}$ secondary alcohol ethoxylates sold under the names TERGITOL® 15-S-12, 15-S-20, 15-S-30, 15-S-40; and octylphenoxy polyethoxy ethanol (40EO) sold under the name TRITON® X-405. All of these surfactants are sold by Union Carbide Corporation, Danbury, Connecticut.

Other types of commercial nonionic surfactants are nonylphenoxy polyethoxy ethanol (10EO) sold under the name MAKON 10 by Stepan Company, Northfield, Illinois; polyoxyethylene 23 lauryl ether (Laureth-23) sold commercially under the name BRIJ 35L by ICI Surfactants, Wilmington, Delaware; and RENEX 30, a polyoxyethylene ether alcohol sold by ICI Surfactants, Wilmington, Delaware. The presence of a nonionic surfactant is optional, however, when one is present, it is present in combination with an anionic or cationic surfactant.

Silicone emulsions that can be treated according to the method of the invention contain a salt that is a product of the neutralization reaction used to deactivate the catalyst used in the emulsion polymerization reaction. The salt can be a simple compound such as sodium acetate formed by neutralization of sodium hydroxide with acetic acid after emulsion polymerization with a cationic surfactant. This is described in US Patent 5661215. The salt can be a more complex compound such as triethanolamine dodecylbenzene sulfonate formed by neutralization of dodecylbenzene sulfonic acid with triethanolamine, as also described in US Patent 5661215.

Most typically, emulsions prepared according to this invention contain a siloxane polymer concentration of 10 to 70 percent by weight of the total emulsion, preferably 25 to 60 percent by weight. While emulsions containing less than 10 percent siloxane polymer content can be made, such emulsions hold little or no economic value. The surfactant is generally present at 0.05 to 30 percent by weight of the total emulsion, preferably 0.1 to 20 percent by weight. Water and salts constitute the balance of the emulsion to 100 percent.

The addition of a preservative after the stripping process may be desirable since emulsions are susceptible to microbiological contamination. Some representative preservatives include compositions such as formaldehyde; 1,3-dimethylol-5,5-dimethyl hydantoin, i.e., DMDM HYDANTOIN; 5-bromo-5-nitro-1,3-dioxane; methyl or propyl paraben; sorbic acid; imidazolidinyl urea; and KATHON CG (5-chloro-2-methyl-4-isothiazolin-3-one).

A particularly significant aspect of the present invention resides in control of polysiloxane viscosity or molecular weight during the stripping operation. Establishment of such control measures is required because the viscosity of polysiloxanes can decrease significantly, or drift, during removal of volatile siloxane oligomers from silicone emulsions by batch processing. This result was unexpected because the drift occurred when the pH of the emulsion was slightly acidic or basic, a condition that typically prevents the emulsion polymerization reaction.

Two chemical reactions are believed to occur during batch or continuous stripping operations as shown below.

*Reaction 1*

$$\equiv SiOSi\equiv + H_2O \rightarrow \equiv SiOH + \equiv SiOH$$

*Reaction 2*

linear or branched polysiloxanes → linear or branched

polysiloxanes + cyclic polysiloxanes

Reaction 1 is the depolymerization reaction, and it was found to proceed much faster than Reaction 2. It is believed that the high interfacial area between the silicone phase and the water phase contributes to the relatively high rate of Reaction 1. Therefore, a method to minimize the concentration of volatile siloxane oligomers in the finished emulsion while maximizing the viscosity of the polymer involves minimizing the amount of time required to effect the

stripping operation. This is accomplished by conducting the stripping operation in continuous flow equipment under conditions resulting in relatively short residence times.

Example 1 - Comparative

This comparative example shows how a batch stripping process according to the procedure of US Patent 4600436 (July 15, 1986) affects siloxane polymer viscosity.

300 gram of an silicone anionic oil-in-water emulsion prepared according to the emulsion polymerization process described in US Patent 5661215 (August 26, 1997), were added to a one liter, three neck, glass, round bottom flask. The anionic silicone oil-in-water emulsion contained a siloxane polymer with a mean particle size of 0.035 micron/ 35 nanometer. The particle size was measured with a Model 150 MICROTRAC® Ultrafine Particle Analyzer manufactured by Honeywell Incorporated, Phoenix, Arizona. The particle size reported was the mean volume-weighted diameter. The anionic silicone oil-in-water emulsion contained 1.7 percent by weight of octamethylcyclotetrasiloxane, a volatile siloxane oligomer, as determined by gas chromatography. The anionic oil-in-water emulsion had a pH of 6, and the siloxane polymer in the anionic oil-in-water emulsion had a viscosity of 1,070,000 centistoke ($mm^2/s$), measured using a Brookfield Model HBDV-III Viscometer equipped with a CP-52 spindle operating at 0.5 revolutions per minute. The flask was fitted with an agitator, a motor, a thermocouple, a temperature indicator, a heating mantle, a variable power supply for the heating mantle, a condenser, and a moisture trap for collecting the overhead. One gram of a diluted sample of commercial grade antifoam was added to the anionic oil-in-water emulsion. The amount of antifoam: was such that it yielded one part per million by weight of antifoam active material in the anionic oil-in-water emulsion. The agitator was set to rotate at 250 revolutions per minute. The anionic oil-in-water emulsion was heated to 103 °C and boiled, such that the rate of condensed steam was 2.6 gram per minute. Fresh water was periodically added to the emulsion to replace water lost from evaporation. The process of batch stripping of the residual octamethylcyclotetrasiloxane from the anionic oil-in-water emulsion was continued for 224 minutes. No foam was observed to form during the batch stripping process. five gram of volatile siloxane oligomers were collected in the moisture trap. The batch stripped anionic oil-in-water emulsion contained 0.2 percent by weight of residual octamethylcyclotetrasiloxane as determined by gas chromatography.

The batch stripped anionic oil-in-water emulsion was broken according to the technique described in Example 1-Procedure-A in US Patent 5661215. The siloxane polymer viscosity was measured with the Brookfield Viscometer noted above. The viscosity of the siloxane polymer in the batch stripped anionic oil-in-water emulsion according to this comparative example was measured to be 843,000 centistoke ($mm^2/s$), which is 21 percent less than the viscosity of the siloxane polymer in the anionic oil-in-water emulsion before it was subjected to the batch stripping process.

It should be noted that the rate of removal of volatile siloxane oligomers was found to be directly proportional to the temperature. This was neither understood nor disclosed in US Patent 4600436. For example, the rate of removal of octamethylcyclotetrasiloxane can be reasonably high at 100 °C as shown in the above example, but it is often much less at temperatures below 70 °C. Stripping at 100 °C, however, as can be seen in Comparative Example 1, results in undesirable changes to the emulsion.

In particular, the molecular weight of the siloxane polymer in the stripped emulsion decreased from its value in the unstripped emulsion. This is believed to be for the reason that depolymerization occured during batch stripping processes. While the emulsion in the above example had been neutralized to a pH of 6, this did not prevent depolymerization according to the procedure of US Patent 4600436.

Simply decreasing the stripping temperature in a batch process to decrease the rate of Reaction 1 is not a completely satisfactory solution to problem of viscosity drift, however, and this is illustrated in Comparative Example 2.

Example 2 - Comparative

Unless otherwise stated, the equipment, conditions and procedures used in Comparative Example 2 were identical to those in Comparative Example 1.

300 gram of the anionic silicone oil-in-water emulsion used in Comparative Example 1 were added to the glass flask. The pressure within the equipment was reduced to 380 torr with a vacuum pump. The anionic oil-in-water emulsion was then heated to 84 °C and boiled such that the rate of condensed steam was 2.6 gram per minute. The process of batch stripping was continued for 432 minutes. The batch stripped anionic oil-in-water emulsion contained 0.4 percent by weight of residual octamethylcyclotetrasiloxane as determined by gas chromatography. The siloxane polymer viscosity was measured in the manner described in Comparative Example 1. Under the same measurement conditions as Comparative Example 1, the siloxane polymer viscosity was 757,000 centistokes ($mm^2/s$), which is 24 percent less than the viscosity of the siloxane polymer in the anionic oil-in-water emulsion before it was subjected to the batch stripping process.

Reducing the stripping temperature from 103 °C to 84 °C resulted in a slower rate of removal of octamethylcyclotetrasiloxane. That is, 0.2 percent by weight of octamethylcyclotetrasiloxane was obtained after 224 minutes at 103 °C and 0.4 percent by weight of octamethylcyclotetrasiloxane was obtained after 432 minutes at 84 °C. As shown above, the siloxane polymer viscosity drift was significant at 84 °C.

Continuous stripping processes are shown in Examples 2-6, and these examples demonstrate the advantage of using a continuous process according to this invention instead of a batch process.

Example 3

450 gram of the anionic silicone oil-in-water emulsion of Comparative Example 1 were added to a 500 milliliter pear shaped flask. No antifoam compound was added to the emulsion. The anionic oil-in-water emulsion was fed by a peristaltic pump through tubing into an inlet in the upper portion of a *spinning band evaporator.* This unit was generally of the type of spinning band column shown in US Patent 2712520 (July 5, 1955). It was constructed of vertical concentric glass tubes. The inner tube contained the spinning band. It was open at both ends to enable an emulsion to be fed into the top of the inner tube, and to allow gas to flow into the bottom, and then out of the top of the inner tube. The outer tube or jacket was isolated from the atmosphere and the inner tube. A heat transfer fluid was circulated in the outer tube by a bath type heating circulator through an inlet located near the bottom and an outlet located near the top of the outer tube. The evaporator was 27 inches high, the inner tube diameter was 5/8 inch, and the outer tube diameter was 1 5/8 inches. A condenser was located at the top of the evaporator, and an outlet was located between the condenser and the evaporator, where condensed liquid flowed into a liquid trap, hereinafter termed *the upper trap.* The spinning band was driven by an electric motor located at the top of the assembly.

A liquid trap was connected to the bottom of the evaporator that enabled steam to flow through the trap, while allowing the emulsion to flow out of the system without losing steam to the atmosphere. This trap is hereinafter called *the lower trap.* The lower trap was wrapped with electrical heating tape to minimize condensation of steam within the lower trap. A one liter glass flask was connected to the lower trap. The one liter flask was fitted with a heating mantle and the heating mantle was connected to a variable power supply. 600 gram of deionized water and boiling aid agents were charged to the one liter flask. The variable power supply was adjusted to provide a steam rate of 5 gram per minute. The temperature of the heat transfer fluid was controlled at 102 °C. Once condensation had begun in the upper liquid trap, the anionic oil-in-water emulsion feed was started at a rate of 3.8 gram per minute. The *spinning band* was set to rotate at a speed of 1,000 revolutions per minute. Condensed water and volatile siloxane oligomers were collected in the upper trap. The lower phase of water was periodically drained from the upper trap. Stripped anionic oil-in-water emulsion was collected in the lower trap. The lower trap was periodically drained. The continuous stripping process was conducted for 80 minutes.

The stripped anionic oil-in-water emulsion contained 0.3 percent by weight of octamethylcyclotetrasiloxane as determined by gas chromatography. The stripped anionic oil-in-water emulsion was broken according to the technique described in Example 1-Procedure-A in US Patent 5661215. The viscosity of the siloxane polymer in the stripped anionic oil-in-water emulsion was measured with a Brookfield Model HBDV-III Viscometer equipped with a CP-52 spindle operating at 0.5 revolutions per minute. The viscosity of the siloxane polymer in the continuously stripped anionic oil-in-water emulsion was 1,070,000 centistoke ($mm^2/s$), the same as the viscosity of the siloxane polymer in the anionic oil-in-water emulsion before it had been subjected to continuous stripping according to the method of this invention.

Example 4

Example 3 was repeated except that the continuous stripping process was allowed to continue for 60 minutes, at a steam rate of 5.0 gram per minute, and an anionic oil-in-water emulsion feed rate of 2.5 gram per minute. The continuously stripped anionic oil-in-water emulsion was found to contain 0.4 percent by weight of residual octamethylcyclotetrasiloxane, and the siloxane polymer in the continuously stripped anionic oil-in-water emulsion was determined to have a viscosity equal to the viscosity of the siloxane polymer in the unstripped anionic oil-in-water emulsion. The mean particle size of the siloxane polymer in the stripped anionic oil-in-water emulsion was 0.043 micron/43 nanometer, showing that siloxane polymer particle size was also not changed by the stripping process according to the present invention.

Example 5

Example 3 was repeated except that the continuous stripping process was allowed to continue for 80 minutes, at a steam rate of 6.7 gram per minute, and an anionic oil-in-water emulsion feed rate of 3.8 gram per minute. The continuously stripped anionic oil-in-water emulsion was found to contain 0.3 percent by weight of residual octamethylcyclotetrasiloxane, and the siloxane polymer in the continuously stripped anionic oil-in-water emulsion was determined to have a viscosity equal to the viscosity of the siloxane polymer in the unstripped anionic oil-in-water emulsion.

Example 6

Example 3 was repeated except that the continuous stripping process was allowed to continue for 80 minutes, at a steam rate of 6.7 gram per minute, and an anionic oil-in-water emulsion feed rate of 4.6 gram per minute. The siloxane polymer in the continuously stripped anionic oil-in-water emulsion was determined to have a viscosity equal to the viscosity of the siloxane polymer in the unstripped anionic oil-in-water emulsion. Four gram of volatile siloxane oligomer were collected in the upper liquid trap during this procedure.

Example 7

Example 3 was repeated except that the continuous stripping process was allowed to continue for 80 minutes, at a steam rate of 4.6 gram per minute, and an emulsion feed rate of 2.8 gram per minute. This example also differed from Examples 3-6 in that instead of using an anionic oil-in-water emulsion, a cationic oil-in-water microemulsion was substituted. The cationic oil-in-water microemulsion was prepared according to the emulsion polymerization process described in European Patent Specification EP 0 459 500 B1 (March 5, 1997), using hexadecyltrimethyl ammonium chloride as cationic surfactant. The cationic oil-in-water microemulsion used in this example contained an amine functional siloxane polymer with a particle size in the microemulsion of 0.023 micron/23 nanometer. The concentration of octamethylcyclotetrasiloxane in the unstripped cationic oil-in-water microemulsion was determined by gas chromatography to be two percent by weight. The cationic oil-in-water microemulsion also had a pH of 7. Prior to the stripping procedure, the viscosity of the amine functional siloxane polymer was 1,250 centistokes ($mm^2/s$).

After the stripping procedure, the viscosity of the amine functional siloxane polymer was 1,312 centistokes ($mm^2/s$). The polymer was obtained from the emulsion in the same manner described in Comparative Example 1. The viscosity of the polymer was also measured in the manner described in Comparative Example 1 except that the speed of the CP-52 spindle was 250 revolutions per minute. Again, the stripping process did not affect the siloxane polymer viscosity. The concentration of octamethylcyclotetrasiloxane in the stripped cationic oil-in-water microemulsion was 0.2 percent by weight. 3 gram of volatile siloxane oligomers were collected in the upper trap during the procedure. The mean particle size of the stripped cationic oil-in-water microemulsion was 0.023 micron/23 nanometer. Therefore, the particle size was also unchanged by the stripping process.

Example 8

A cationic silicone oil-in-water emulsion was prepared according to the emulsion polymerization process described in European Patent Specification EP 0 459 500 B1 (March 5, 1997), using ARQUAD 16-29 as the cationic surfactant and RENEX 30 as the nonionic surfactant. The cationic oil-in-water emulsion used in this example had a volume-weighted mean particle size of 0.137 micron/137 nanometer, and contained an amine functional siloxane polymer. The polymer viscosity was 3,030 centistoke ($mm^2/s$), as measured with a Brookfield Model DV-II Viscometer equipped with a CP-52 spindle operating at 10 revolutions per minute. The pH of the emulsion was 7. The concentration of octamethylcyclotetrasiloxane in the emulsion was 2.2 percent by weight of the total emulsion as determined by gas chromatography. The same equipment and method used in Example 3 were used in this present example.

350 gram of the emulsion were fed to the spinning band evaporator at a rate of 3.0 gram per minute. The steam flow rate was 4.7 gram per minute. The stripped emulsion was collected, placed in a feed flask, and passed through the spinning band evaporator for a second time under the same conditions. After 30 minutes had elapsed from the beginning of the second pass, a sample of the stripped emulsion was removed and analyzed using the same techniques as described in Example 3. 3.7 gram of volatile siloxane oligomers were collected in the upper trap over the course of the first pass and during 30 minutes of the second pass.

The volume-weighted mean particle size of the stripped emulsion was 0.139 micron/139 nanometer. The concentration of octamethylcyclotetrasiloxane in the stripped emulsion was 0.6 percent by weight of the total emulsion. The siloxane polymer viscosity was 2,900 centistoke ($mm^2/s$), which is for all practical purposes, the same as the viscosity of the siloxane polymer in the cationic oil-in-water emulsion before it had been subjected to continuous stripping according to the method of this invention.

These Examples demonstrate at least two distinct benefits of the continuous process for removing volatile siloxane oligomers from emulsions prepared by emulsion polymerization according to this invention. One benefit is that a continuous process subjects the emulsion to a high temperature, which is necessary to effect separation, for a short period of time. Short exposure to high temperatures prevents depolymerization of the siloxane polymer, which can occur during any lengthy batch process as can be seen in Comparative Examples 1 and 2. Depolymerization is undesirable because the value of a silicone emulsion is often directly proportional to the molecular weight of the siloxane

polymer in the emulsion.

The second benefit is that no antifoam is needed to reduce foaming normally associated with boiling of emulsions in batch processes. This benefit is significant especially as it relates to the ability to obtain clear microemulsions. This is for the reason that addition of an antifoam compound, even at very low levels, is a detriment to product clarity as it necessarily introduces into the microemulsion a small population of large particles.

A third benefit is that it is often desirable to prepare silicone emulsions that do not contain, or that contain only very low levels of volatile siloxane oligomers, because of certain environmental, health, and safety requirements, now mandated in many domestic and foreign jurisdictions.

The removal of volatile siloxane oligomers from emulsions is also a benefit to the extent that their removal and reuse prevents the loss of an otherwise valuable commodity, i.e., the volatile siloxane oligomer, in many applications where only the siloxane polymer has any real value in the application.

Finally, removal of the volatile siloxane oligomer from emulsions used in textile mills, paper printing facilities, and other manufacturing operations, is a benefit since it obviates the potential conversion of volatile siloxane oligomers to silica dust in pollution control equipment that operates at high temperature. Silica dust is known to foul certain pollution control equipment, thereby reducing the operating efficiency and increasing the maintenance costs of such equipment.

Emulsions prepared according to this invention are useful in paper coating, textile coating, and home care applications for delivering silicone polymers to various surfaces and substrates. They can also be used to deliver silicone polymers of tailored rheological properties to the human body, i.e., as in shampoo bases to provide styling and conditioning benefits to hair, or as a delivery mechanism for use in the care of skin.

Compositions found to be most useful according to this invention generally comprise emulsions and microemulsions containing the siloxane polymer having an average particle diameter of less than 1 micron/1,000 nanometer, and less than 0.14 micron/140 nanometer, respectively.

## Claims

1. A continuous process for removing volatile siloxane oligomers from an emulsion containing siloxane polymers and volatile siloxane oligomers prepared by emulsion polymerization of volatile siloxane oligomers comprising continuously feeding the emulsion to a continuous flow device for vaporizing liquids, continuously feeding a stripping gas to the continuous flow device, continuously removing an overhead fraction of volatile siloxane oligomers from the continuous flow device, and continuously removing an unvaporized bottom fraction from the continuous flow device of an emulsion containing siloxane polymers which is substantially free of residual volatile siloxane oligomers used to prepare the emulsion.

2. A process according to Claim 1 in which the continuous flow device for vaporizing liquids is a unit selected from the group consisting of climbing thin film evaporators, falling thin film evaporators, spinning disc film evaporators, spinning band columns, agitated thin film evaporators, horizontal wiped film evaporators, vertical wiped film evaporators, units with climbing and falling films, packed columns, and plate columns.

3. A process according to Claim 1 in which the stripping gas is selected from the group consisting of steam, nitrogen, air, argon, and mixtures thereof.

4. A process according to Claim 1 in which a temperature of 70-110 °C is maintained in the continuous flow device for vaporizing liquids.

5. A process according to Claim 1 in which the process is continued until the emulsion in the unvaporized bottom fraction being continuously removed from the continuous flow device for vaporizing liquids contains less than 0.18 parts by weight of the volatile siloxane oligomer per unit weight of the siloxane polymer in the emulsion.

6. An emulsion prepared according to the process defined in Claim 1 in which the viscosity of the siloxane polymer in the emulsion before the emulsion is fed to the continuous flow device is substantially the same as the viscosity of the siloxane polymer in the emulsion after the emulsion is removed from the continuous flow device.

7. A method of treating a surface or substrate selected from the group consisting of hair, skin, paper, and textile, comprising applying to the surface or substrate the emulsion prepared according to the method defined in Claim 1.